(19) **Europäisches Patentamt**
**European Patent Office**
**Office européen des brevets**

(11) **EP 2 557 486 B1**

(12) **EUROPEAN PATENT SPECIFICATION**

(45) Date of publication and mention
of the grant of the patent:
**07.10.2015 Bulletin 2015/41**

(21) Application number: **11766116.5**

(22) Date of filing: **05.04.2011**

(51) Int Cl.:
*C09J 7/00* (2006.01)     *G06F 3/041* (2006.01)

(86) International application number:
**PCT/KR2011/002359**

(87) International publication number:
**WO 2011/126265 (13.10.2011 Gazette 2011/41)**

(54) **ADHESIVE FILM FOR A TOUCH PANEL, AND TOUCH PANEL**

HAFTZUSAMMENSETZUNG FÜR EINEN BERÜHRUNGSBILDSCHIRM UND
BERÜHRUNGSBILDSCHIRM

FILM ADHÉSIF POUR PANNEAU TACTILE ET PANNEAU TACTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.04.2010 KR 20100031534**

(43) Date of publication of application:
**13.02.2013 Bulletin 2013/07**

(73) Proprietor: **LG Hausys, Ltd.**
**Seoul 150-721 (KR)**

(72) Inventors:
• **KIM, Jang-Soon**
**Seongnam-si**
**Gyeonggi-do 463-889 (KR)**
• **SONG, Min-Seok**
**Daejeon 305-810 (KR)**
• **LEE, Yong-Hoon**
**Seoul 150-721 (KR)**
• **LEE, Eok-Hyung**
**Cheongju-si**
**Chungcheongbuk-do 361-727 (KR)**

• **CHOI, Won-Gu**
**Cheongju-si**
**Chungcheongbuk-do 361-758 (KR)**
• **HAN, Hak-Rhim**
**Seoul 150-721 (KR)**

(74) Representative: **Winter, Brandl, Fürniss, Hübner,
Röss, Kaiser, Polte - Partnerschaft mbB
Patent- und Rechtsanwaltskanzlei
Bavariaring 10
80336 München (DE)**

(56) References cited:
**EP-A1- 1 574 557      JP-A- 2003 036 143
JP-A- 2006 056 117      JP-A- 2007 118 499
KR-A- 20100 009 544**

Remarks:
The file contains technical information submitted after
the application was filed and not included in this
specification

EP 2 557 486 B1

**Description**

The present invention relates to an adhesive film for a touch panel and a touch panel.

Recently, the market for mobile communication devices, such as mobile phones, PHSs, and PDAs, has been growing. Such mobile communication devices are moving towards slimness, lightweight, low-power consumption, high resolution, and high brightness.

In particular, a device equipped with a touch panel or touchscreen as an input unit has a structure in which a transparent conductive plastic film, for example, a polyethylene terephthalate (PET) base film having a conductive thin layer of indium tin oxide (ITO) formed on one side thereof, is stacked on a conductive glass, a reinforcing material, or a decorative film through an adhesive film in consideration of weight reduction and breakage prevention.

An adhesive for attaching a transparent conductive film in a touchscreen or touch panel needs to have various physical properties, such as surface leveling performance for relieving an uneven surface due to a decorative film, durability for suppressing generation of curls or bubbles when exposed to severe conditions, e.g., high temperature or high humidity, cuttability for preventing the adhesive from sticking out or from being squashed when cut, and excellent adhesion to various substrates, as well as optical characteristics and workability.

Particularly, in manufacture of a touch panel or touchscreen, a process of curing an adhesive composition is performed at 140°C or more for 2 hours or more. Also, a process of bonding an anisotropic conductive foil (ACF) in assembly of a printed circuit board (PCB) is performed at a high temperature of 120°C or more. In these processes, an adhesive composition or adhesive having low heat resistance can cause air pockets, bubbles, separation, or curls between the adhesive and an adherend (e.g., a transparent conductive film).

Further, when writing on a surface of a window of a touch panel, inadequate durability of an adhesive film disposed under the window can cause separation of the adhesive. Further, low restoring force by low elasticity causes a trace to remain after writing.

EP 1 574 557 A1 discloses a transparent double-sided pressure-sensitive adhesive tape or sheet which contains a transparent substrate and a transparent pressure-sensitive adhesive layer disposed on each side of the substrate. The transparent pressure-sensitive adhesive layer disposed on at least one side of the transparent substrate is a layer formed from a pressure-sensitive adhesive composition containing a specific acrylic polymer and a specific oligomer. A touch panel having a transparent plastic base may have a constitution in which the transparent double-sided pressure-sensitive adhesive tape or sheet has been laminated to the transparent plastic base.

KR 2006-0043847 A discloses an adhesive composition, which is a transparent adhesive used for a touch panel, and includes an acrylic polymer having a weight average molecular weight of 500,000 to 900,000 and a low molecular weight oligomer having a weight average molecular weight of 3,000 to 6,000.

However, the adhesive disclosed in this publication generates air pockets or bubbles between the adhesive and an adherend, or causes panel warping, separation, or curling due to considerably low heat resistance when applied to a high-temperature process at about 100°C or more. Further, when writing on a surface of a window of a touch panel, a trace can remain after writing due to reduced restoring force by low molecular weight additives included in the adhesive, and separation of the adhesive can occur over time.

The present invention provides an adhesive film for a touch panel as defined in claim 1, and a touch panel comprising an adhesive film. Further embodiments are defined in the dependent claims

One aspect of the present invention provides an adhesive film for a touch panel including a sheet-form adhesive layer and satisfying Equation 1:

$$X \geq 100{,}000$$

where X represents the number of times the adhesive film passes through a writing test performed using a 0.8R pen at a transfer rate of 60 mm/s and a weight of 450 gf until an average terminal resistance increase value of the touch panel is 1 Ω or more.

Another aspect of the present invention provides a touch panel as defined in claim 14, which includes a window film; the adhesive film attached to a lower surface of the window film; and a conductive laminate attached to a lower surface of the adhesive film.

According to the present invention, an adhesive film has excellent heat resistance in high-temperature processes in manufacture of a touch panel, such as a curing process or a PCB assembly process. In addition, the adhesive film exhibits superior wettability to adherends, optical characteristics, cuttability, workability, and durability and does not cause panel warpage, separation, and curling.

Description of Drawings

Fig. 1 is a side-sectional view of a sample prepared for a writing test according to the present invention;
Fig. 2 is a side-sectional view of an adhesive film according to one embodiment of the present invention;
Fig. 3 is a side-sectional view of a conventional adhesive film for touch panels;
Fig. 4 illustrates a process of measuring dynamic shear strength of an adhesive layer according to the present invention;
Fig. 5 illustrates a process of measuring static shear maintenance time of an adhesive layer according to the present invention;
Fig. 6 is a side-sectional view of an adhesive film according to another embodiment of the present invention; and
Fig. 7 illustrates a touch panel according to one embodiment of the present invention.

The present invention relates to an adhesive film for a touch panel which includes a sheet-form adhesive layer and satisfies the following Equation 1:

$$X \geq 100,000,$$

where X represents the number of times the adhesive film passes through a writing test performed using a 0.8R pen at a transfer rate of 60 mm/s and a weight of 450 gf until an average terminal resistance increase value of the touch panel is 1 $\Omega$ or more.

Hereinafter, the adhesive film according to the present invention will be described in detail.

According to the present invention, the adhesive film includes a sheet-form adhesive layer and the number of times the adhesive film normally subjected to a writing test conducted under specific conditions satisfies Equation 1.

In the present invention, the writing test may be conducted as follows.

Writing test is conducted using a resistive touch panel prepared using a double-sided adhesive sheet, which is obtained by forming sheet-form adhesive layers included in the adhesive film of the present invention on opposite sides of a substrate. In this case, the substrate for the double-sided adhesive sheet is a polyethylene terephthalate (PET) film having a thickness of 12 $\mu$m, and the sheet-form adhesive layers formed on the opposite sides of the substrate have a thickness of 50 $\mu$m.

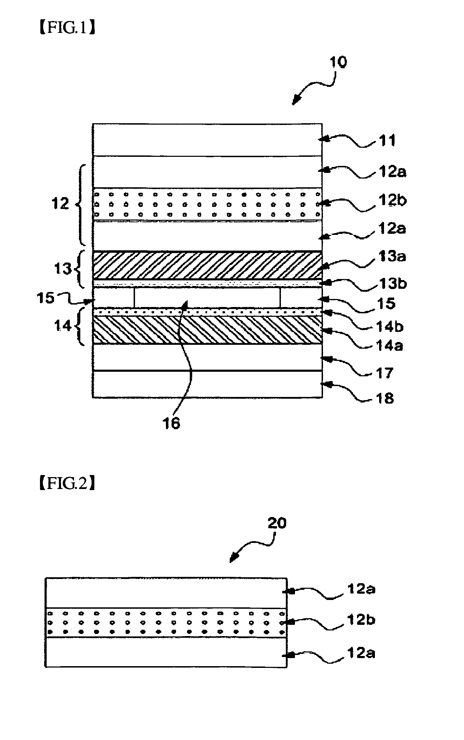

Fig. 1 is a side-sectional view of a sample 10, i.e., a resistive touch panel, used for a writing test according to the present invention. Specifically, according to the present invention, sheet-form adhesive layers 12a of an adhesive film according to one embodiment are formed on opposite sides of a substrate 12b to prepare a double-sided adhesive sheet 12, which bonds a window film 11 and a conductive laminate, thereby constituting the resistive touch panel 10. Here, the conductive laminate has a structure in which two sheets of plastic films 13a, 14a each having conductive layers 13b, 14b on one surface thereof are bonded via a double-sided adhesive tape (DAT) 15, with the conductive layers 13b, 14b facing each other. Further, the conductive laminate is bonded to a polycarbonate substrate 18 via an adhesive film 17. Details of elements used for the sample of the present invention are as follows.

<Configuration of the sample>

Window film 11: PET film having a thickness of 1,885 $\mu$m
Conductive plastic films 13 and 14: PET film including an indium tin oxide (ITO) layer 13b, 14b formed on one surface thereof and having a thickness of 125 $\mu$m (manufactured by Hansung)
DAT 15: Acrylic adhesive having a thickness of 80 $\mu$m (FD8085®, manufactured by LG Hausys)
Adhesive film 17: Acrylic adhesive having a thickness of 50 $\mu$m (OA9052T®, manufactured by LG Hausys)
Plastic substrate 18: Polycarbonate substrate having a thickness of 1 mm (manufactured by I-Component)
In the present invention, the sample 10 of Fig. 1 is prepared using the foregoing elements in a general way of manufacturing a resistive touch panel. Then, the sample 10 is subjected to a writing test using a 0.8R pen at a transfer rate of 60 mm/s and a weight of 450 gf until an average terminal resistance increase value of the touch panel is 1 $\Omega$ or more, followed by counting the number of times the sample is subjected to the writing test until the sample loses functions of the touch panel. In writing test, the pen moves a distance of 35 mm back and forth along an edge of the touch panel. Also, "time at which the sample loses functions of the touch panel" is defined as time when an average terminal resistance increase value in writing is 1$\Omega$ or more, wherein a terminal resistance level may be measured by a measuring instrument commonly used in the art. In the present invention, the average terminal resistance increase value may be calculated by Equation 4:

$$X_3 = R_2 - R_1,$$

where $X_3$ represents an average terminal resistance increase value of the touch panel, $R_1$ represents an average terminal resistance of the touch panel before writing test, and $R_2$ represents an average terminal resistance of the touch panel after writing test.

The adhesive film has a writing test passing time of 100,000 or more, preferably 120,000 or more, and more preferably 150,000 or more. Within this range, the adhesive film may exhibit superior durability when applied to a touch panel.

In the present invention, an upper limit of the writing test passing time is not particularly limited. That is, the greater the writing test passing time, the more durability the adhesive film exhibits. In one embodiment, the adhesive film has a writing test passing time of, for example 700,000 or less, preferably 500,000 or less, and more preferably 300,000 or less.

The adhesive film may further include a base film. In this case, the sheet-form adhesive layer may be directly attached to opposite sides of the base film.

Fig. 2 is a side-sectional view of an adhesive film 20 according to one embodiment. As shown in Fig. 2, the adhesive film 20 may include a base film 12b and adhesive layers 12a directly attached to opposite sides of the base film 12b. In the present invention, the expression "adhesive layers directly attached to the opposite sides of the base film" means that there is no intervening layer or film, for example, a hard coating, between the base film and each adhesive layer.

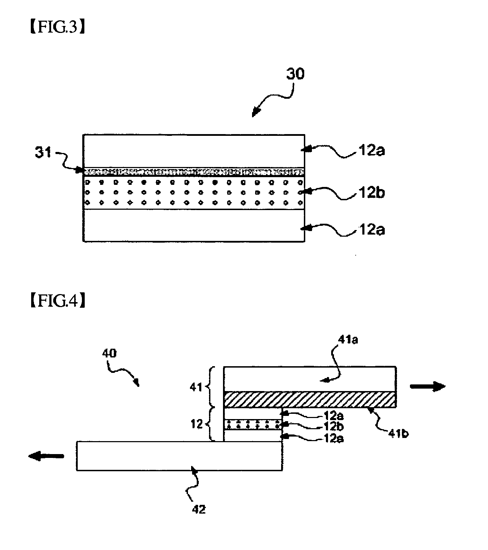

The adhesive film according to the present invention may be used to bond a window film and a conductive laminate in a resistive touch panel. However, a conventional adhesive film 30 for a touch panel used for this purpose generally has a structure in which a hard coating 31 is formed between a substrate 12b and an adhesive layer 12a to secure surface pressure durability, as shown in Fig. 3.

However, the adhesive film according to the present invention satisfies Equation 1 and thus may secure excellent surface pressure durability without a hard coating, as shown in Fig. 2. Accordingly, the adhesive film may contribute to decrease in material and processing costs in forming a hard coating of a resistive touch panel and prevent deterioration in physical properties, e.g., durability, due to quality variation caused by the hard coating.

There is no particular restriction as to the kind of the base film included in the adhesive film of the present invention, and any plastic film commonly used in the art may be used. Examples of the base film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, or a polyimide film. In particular, a PET film may be used.

In the present invention, the base film has a thickness of 5 to 100 $\mu$m, preferably 10 to 50 $\mu$m. Within this range, the adhesive film can not only be applied to a thin touch panel or touchscreen but also has excellent heat resistance, optical characteristics, cuttability, workability, wettability, and durability.

The adhesive layer included in the adhesive film of the present invention may satisfy Equation 2:

$$[\text{Equation 2}]$$
$$X_1 \geq 6 \text{ kg/cm}^2,$$

where $X_1$ represents a dynamic shear strength value of the adhesive layer, measured at 140°C and a crosshead speed of 0.8 mm/sec using a sample prepared by attaching the adhesive layer to the ITO PET film and a glass substrate to be interposed therebetween.

That is, the adhesive layer according to the present invention has dynamic shear strength satisfying Equation 2, as measured by a dynamic shear test under specified conditions. $X_1$ is 6.5 to 15 kg/cm2, preferably 6.5 to 10 kg/cm2.

Fig. 4 illustrates a process of measuring dynamic shear strength of the adhesive layer according to the present invention. Referring to Fig. 4, to measure the dynamic shear strength, a double-sided adhesive sheet 12 is prepared by attaching sheet-form adhesive layers 12a included in the adhesive film of the present invention to opposite sides of a base film 12b, and then a glass substrate 42 and a conductive plastic film 41 are bonded using the double-sided adhesive sheet 12. The conductive plastic film 41 has a structure in which an ITO layer 41b and a PET film 41a are stacked, and the sheet-form adhesive layer 12a may be attached to the ITO layer 41 b of the film 41.

In the test, the double-sided adhesive sheet has a size of 2.5 cm x 2.5 cm (width x length) and a thickness of

112 μm. Here, the base film 12b has a thickness of 12 μm and each adhesive layer 12a attached to the opposite sides of the base film 12b has a thickness of 50 μm. After preparing the sample as shown in Fig. 4, the dynamic shear strength of the adhesive layer is measured by pulling the glass substrate 42 and the ITO PET film 41 in opposite directions (arrow directions in Fig. 4) at a crosshead speed of 0.8 mm/sec using a tensile tester until the glass substrate 42 or the ITO PET film 41 starts separating from the adhesive layer 12a.

In the present invention, when the dynamic shear strength of the adhesive layer is 6.0 kg/cm$^2$ or more, the adhesive may have excellent wettability to a variety of adherends, optical characteristics, cuttability, workability and durability, particularly superior heat resistance, and thus does not cause warpage, separation, and curling under high-temperature conditions.

The adhesive layer according to the present invention may also satisfy Equation 3:

$$[\text{Equation 3}]$$

$$X_2 \geq 10 \text{ min,}$$

where $X_2$ represents a maintenance time of the adhesive layer, i.e., static shear maintenance time, measured using a sample at 140°C by applying a load of 2 kg to an ITO PET film. Here, the sample is prepared by attaching the adhesive layer to the ITO PET film and a glass substrate to be interposed therebetween.

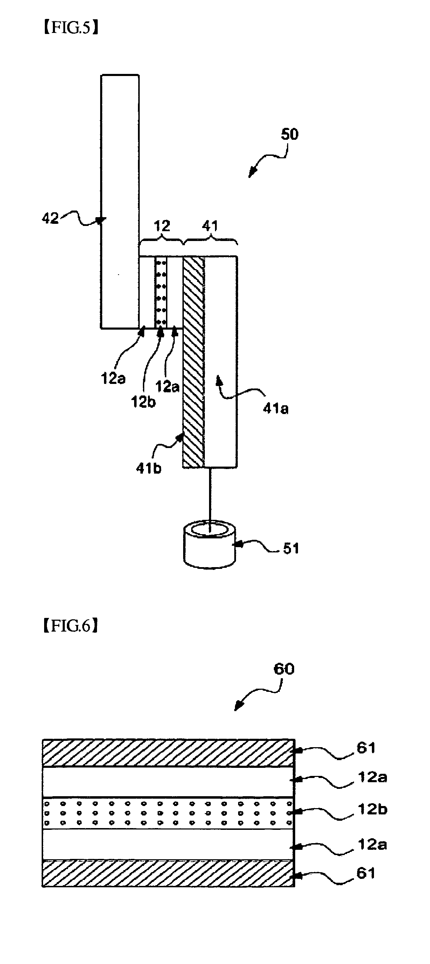

Fig. 5 illustrates a process of measuring static shear maintenance time of the adhesive according to the present invention.

As shown in Fig. 5, the static shear maintenance time of the adhesive layer may be measured by bonding a glass substrate 42 and an ITO PET film 41 using the same double-sided adhesive sheet 12 as in measurement of the dynamic shear strength and applying a load to the ITO PET film 41.

In the test shown in Fig. 5, the thickness and size of the adhesive sheet 12 and the configurations of the glass substrate 42 and the ITO PET film 41 are the same as those in measurement of the dynamic shear strength in Fig. 4.

After preparing the sample as shown in Fig. 5, a load is applied to the ITO PET film 41 using a 2 kg of weight 51 at 140°C. Then, time at which the ITO PET film 41 or the glass substrate 42 is separated from the adhesive layer is measured, thereby calculating the static shear maintenance time of the adhesive layer.

According to the present invention, the adhesive layer has a static shear maintenance time ($X_2$) of 10 minutes or more, preferably 15 minutes or more, and more preferably 20 minutes or more. If the static shear maintenance time of the adhesive layer is 10 minutes or more, the adhesive has superior heat resistance and thus does not cause warping, separation, and curling under high-temperature conditions.

In the present invention, an upper limit of the static shear maintenance time is , for example, about 80 minutes or less, preferably 60 minutes or less, and more preferably 50 minutes or less.

The sheet-form adhesive layer according to the present invention may be a cured product of an adhesive composition including an acrylic resin and a polyfunctional crosslinking agent. In this case, the acrylic resin included in the composition may have a weight average molecular weight of 1,000,000 or more. Here, the weight average molecular weight is obtained based on polystyrene conversion in GPC (Gel Permeation Chromatography). If the acrylic resin has a weight average molecular weight of 1,000,000 or more, the adhesive layer can have excellent heat resistance and durability, and does not contaminate an adherend by transferring to the adherend in re-peeling.

In the present invention, an upper limit of the weight average molecular weight of the acrylic resin is 3,000,000 or less, preferably 2,500,000 or less in view of coatability.

In the present invention, the acrylic resin may be, for example, a polymer of a monomer mixture including a (meth)acrylic acid ester monomer and a crosslinking monomer.

There is no particular restriction as to the kind of the (meth)acrylic acid ester monomer, which may include, for example, alkyl (meth)acrylates. In this case, when too long an alkyl group is included in the monomer, the cohesion of the cured product may decrease and the glass transition temperature or tack of the cured product may not be properly adjusted. Thus, alkyl (meth)acrylates having a C1 to C14, preferably C1 to C8 alkyl group are used. Examples of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, or isononyl methacrylate, which may be used alone or as mixtures.

The crosslinking monomer included in the monomer mixture is a monomer including both a copolymerizable functional group (e.g., α, β-unsaturated carbon-carbon double bond) and a crosslinking functional group, and may provide a resin with a crosslinking functional group reacting with the polyfunctional crosslinking agent.

Examples of the crosslinking monomer may include a hydroxyl group containing monomer, a carboxylic group containing monomer, and a nitrogen containing monomer, which may be used alone or as mixtures. In some embodiments, a carboxylic group containing monomer may be advantageously used as the crosslinking monomer. Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate, without being limited thereto. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam.

In the present invention, the monomer mixture includes 80 to 99.9 parts by weight of the (meth)acrylic acid ester monomer and 0.1 to 10 parts by weight of the crosslinking monomer, preferably 90 to 99.9 parts by weight of the (meth)acrylic acid ester monomer and 0.1 to 10 parts by weight of the crosslinking monomer. Within this range, the adhesive can have excellent reliability, handling properties, durability, and re-peeling properties and can effectively prevent separation or peeling due to decrease in initial adhesive strength.

Unless otherwise indicated in the specification, "parts by weight" denotes "ratio by weight."

In the present invention, there is no particular restriction as to a method of preparing an acrylic resin by polymerizing the monomer mixture including the foregoing ingredients. For example, a general polymerization method, such as solution polymerization, photopolymerization, bulk polymerization, suspension polymerization, or emulsion polymerization, may be used.

The adhesive composition according to the present invention further includes the polyfunctional crosslinking agent, and cohesion or adhesion of the cured product may be adjusted based on the amount of the polyfunctional crosslinking agent.

There is no particular restriction as to the kind of the polyfunctional crosslinking agent to be used in the present invention. For example, the polyfunctional crosslinking agent may include common crosslinking agents, such as isocyanate compounds, epoxy compounds, aziridine compounds, and chelating agents. Examples of the isocyanate compound may include tolylene diisocyanate, xylene diisocyanate, diphenylmethane diisocyanate, hexamethylene diisocyanate, isophorone diisocyanate, tetramethylxylene diisocyanate, naphthalene diisocyanate, and adducts of at least one of these isocyanate compounds and a polyol (e.g., trimethylolpropane), which may be used alone or as mixtures. Examples of the epoxy compound may include at least one selected from the group consisting of ethylene glycol diglycidyl ether, triglycidyl ether, trimethylolpropane triglycidyl ether, N,N,N',N'-tetraglycidyl ethylene diamine, and glycerin diglycidyl ether. Examples of the aziridine compound may include at least one selected from the group consisting of N,N'-toluene-2,4-bis(1-aziridinecarboxamide), N,N'-diphenylmethane-4,4'-bis(1-aziridinecarboxamide), triethylenemelamine, bisisophthaloyl-1-(2-methylaziridine), and tri-1-aziridinylphosphine oxide. Examples of the chelating agent may include compounds obtained by coordinating acetylacetone or ethyl acetoacetate with polyvalent metal, such as aluminum, iron, zinc, tin, titanium, antimony, magnesium, and/or vanadium.

The polyfunctional crosslinking agent is present in an amount of 0.01 to 10 parts by weight, preferably 0.01 to 5 parts by weight based on 100 parts by weight of the acrylic resin. If the amount of the crosslinking agent is less than 0.01 parts by weight, cohesion of the cured product may deteriorate, causing bubbles under high-temperature conditions. If the amount of the crosslinking agent is greater than 10 parts by weight, the adhesive is excessively cured, causing decrease in adhesive strength and peel strength. Thus, peeling or separation between layers can occur, reducing durability.

The adhesive composition according to the present invention may further include a silane coupling agent. The coupling agent functions to enhance adhesion and adhesive stability of the cured product to an object, particularly a glass substrate, thus improving heat resistance and moisture resistance. Also, a proper amount of the silane coupling agent may enhance adhesive reliability of the cured product under high-temperature and/or high-humidity conditions and ultimate adhesive strength of the cured product.

There is no particular restriction as to the kind of the silane coupling agent, and examples of the silane coupling agent may include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-**isocyanatopropyltriethoxysilane, or** γ-acetoacetatetripropyltrimethoxysilane, which may be used alone or as mixtures.

The silane coupling agent may be present in an amount of 0.005 to 5 parts by weight based on 100 parts by weight of the acrylic resin. If the amount of the silane coupling agent is less than 0.005 parts by weight, the coupling agent does not effectively work. If the amount of the silane coupling agent is greater than 5 parts by weight, bubbles or peeling of the adhesive layer can occur due to coupling agent residues, thereby deteriorating durability.

The adhesive composition according to the present invention may further include a tackifier in order to adjust tack performance.

Examples of the tackifier may include, for example, hydrocarbon resins or hydrogenated products thereof; rosins or hydrogenated products thereof; rosin esters or hydrogenated products thereof; terpene resins or hydrogenated products thereof; terpene phenolic resins or hydrogenated products thereof; and polymerized rosins or polymerized rosin esters, which may be used alone or as mixtures.

The tackifier may be present in an amount of 1 to 100 parts by weight based on 100 parts by weight of the acrylic resin. If the amount of the tackifier is less than 1 part by weight, the tackifier does not work properly. If the amount of the tackifier is greater than 100 parts by weight, improvement in compatibility or cohesion becomes insignificant, thus decreasing reliability of the adhesive layer or causing turbidity of the adhesive layer.

The adhesive composition according to the present invention may further include at least one additive selected from the group consisting of epoxy resins, UV stabilizers, antioxidants, toning agents, reinforcing agents, fillers, antifoaming agents, surfactants, and plasticizers so long as the additives do not affect aspects of the present invention.

There is no particular restriction as to a method of manufacturing the adhesive layers by curing the adhesive composition. In some embodiments, the adhesive composition or a coating solution prepared using the same is applied to a proper substrate using a typical instrument, e.g., a bar coater, and cured, thereby preparing an adhesive layer.

Curing may be carried out after volatile components or reaction residues are completely removed from the adhesive composition or the coating solution so as not to cause formation of bubbles. Accordingly, decrease in elastic modulus of the adhesive due to too low a crosslink density or molecular weight may be prevented. Further, it is possible to prevent formation of bubbles between adhesive layers, which can grow into scattering adherends.

There is no particular restriction as to a method of curing the adhesive composition or the coating solution. For example, curing may be carried out by properly heating the coating layer or aging the coating layer under predetermined conditions.

In the adhesive film, the sheet-form adhesive layer has a thickness of 15 to 100 $\mu$m, preferably 20 to 70 $\mu$m. Within this range, the adhesive film can not only be applied to a thin touch panel or touchscreen but have excellent heat resistance, optical characteristics, cuttability, workability, wettability, and durability.

The adhesive film of the present invention may further include a release film formed on one surface of the adhesive layer as necessary. Fig. 6 is a side-sectional view of an adhesive film 60 according to another embodiment of the invention. As shown in Fig. 6, the adhesive film 60 may further include a release film 61 formed on one surface of each adhesive layer 12a.

There is no particular restriction as to the kind of the release film to be used in the present invention, and any typical plastic films in the art may be used. Examples of the release film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, or a polyimide film. Further, one or both sides of the release film may be subjected to proper release treatment. Examples of a release agent used for release treatment may include alkyd, silicone, fluorine, unsaturated ester, polyolefin, or wax release agents. Among these, alkyd, silicone, and fluorine release agents may e.g. be used in terms of heat resistance.

The thickness of the release film is not particularly limited, but may be adjusted properly depending on purpose. For example, the release film has a thickness of 20 to 80 $\mu$m, preferably 30 to 70 $\mu$m.

The present invention also relates to a touch panel which includes a window film; the adhesive film according to the present invention attached to a lower surface of the window film; and a conductive laminate attached to a lower surface of the adhesive film.

A structure of the touch panel is not particularly limited so long as the adhesive film of the present invention is used to bond the window film and the conductive laminate.

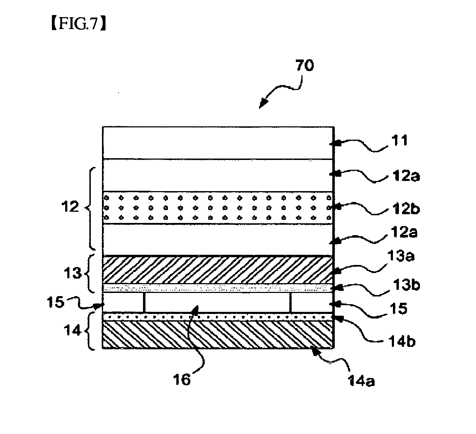

Fig. 7 is a side-sectional view of a touch panel 70 according to one embodiment of the present invention.

Referring to Fig. 7, the touch panel 70 may have a structure in which a window film 11, the adhesive film 12 according to the one embodiment of the invention, and a conductive laminate are sequentially stacked from the top.

In the present invention, the conductive laminate may have a structure in which transparent plastic films 13a, 14a each having a conductive layer 13b, 14b formed on one surface thereof are disposed to be separated from each other, with the conductive layers 13b, 14b facing each other. In this case, opposite edges of conductive films 13 and 14 including the conductive layers 13b, 14b and the transparent plastic films 13a, 14a are bonded to each other via a double-sided adhesive tape (DAT) 15, with a space 16 defined therebetween.

In the present invention, there is no particular restriction as to the kind of each element constituting the touch panel 70, i.e., the window film, the conductive films, or the double-sided adhesive tape, and any element generally used in the art may be employed.

Further, the touch panel of the present invention may have a structure in which the conductive laminate is attached to a proper plastic substrate. In this case, the structure of the touch panel may be similar to that of the sample used for the writing test shown in Fig. 1.

## Examples

Hereinafter, the present invention will be explained in more detail with reference to examples according to the present invention and comparative examples.

### Preparative Example 1: Preparation of acrylic resin (A)

65 parts by weight of ethylhexyl acrylate (EHA), 25 parts by weight of methyl acrylate (MA), and 10 parts by weight of acrylic acid (AA) were put into a 1L reactor equipped with a reflux condenser for supply of nitrogen gas and for easy temperature adjustment, and 100 parts by weight of ethyl acetate (EAc) as a solvent was added to the reactor. Then, after oxygen was purged from the reactor with nitrogen gas for 1 hour, the mixture was evenly stirred at 62°C, followed by addition of 0.03 parts by weight of azobisisobutyronitrile (AIBN) diluted with ethyl acetate to 50% as a reaction initiator. Subsequently, the mixture was reacted to prepare an acrylic resin (A) having a weight average molecular weight of 1,500,000.

### Preparative Example 2: Preparation of acrylic resin (B)

An acrylic resin (B) having a weight average molecular weight of 2,000,000 was prepared in the same manner as in Preparative Example 1 except that reaction conditions including the content of the reaction initiator were properly adjusted.

### Preparative Example 3: Preparation of acrylic resin (C)

An acrylic resin (C) having a weight average molecular weight of 800,000 was prepared in the same manner as in Preparative Example 1 except that reaction conditions including the content of the reaction initiator were properly adjusted.

### Preparative Example 4: Preparation of low molecular weight acrylic compound (D)

A low molecular weight acrylic compound (E) having a weight average molecular weight of 5,000 was prepared using a monomer mixture including 90 parts by weight of a cyclohexyl methacrylate (CHMA) and 10 parts by weight of acrylic acid (AA) by properly adjusting preparation conditions in Preparative Example 1.

### Example 1

100 parts by weight of the acrylic resin (A) and 0.5 parts by weight of a bifunctional aziridine crosslinking agent as a polyfunctional crosslinking agent were mixed into an adhesive composition, which was then used to prepare a coating solution. The coating solution was applied to a release-treated surface of a release-treated PET film (thickness: 50 $\mu$m) to a thickness of about 50 $\mu$m after drying. The product was dried and aged under suitable conditions, thereby forming an adhesive layer having a thickness of 50 $\mu$m. Then, the adhesive layer was laminated to opposite sides of a PET film with a thickness of 12 $\mu$m, thereby producing a double-sided adhesive film.

### Example 2

100 parts by weight of the acrylic resin (B) and 0.5 parts by weight of a bifunctional aziridine crosslinking agent as a polyfunctional crosslinking agent were mixed into an adhesive composition, which was then used to prepare a coating solution. The coating solution was applied to a release-treated surface of a release-treated PET film (thickness: 50 $\mu$m) to a thickness of 50 $\mu$m after drying. The product was dried and aged under suitable conditions, thereby forming an adhesive layer having a thickness of 50 $\mu$m. Then, the adhesive layer was laminated to opposite sides of a PET film with a thickness of 12 $\mu$m, thereby producing a double-sided adhesive film.

### Comparative Example 1

100 parts by weight of the acrylic resin (C), 10 parts by weight of the low molecular weight acrylic compound (D) prepared in Preparative Example 4, and 0.5 parts by weight of a bifunctional aziridine crosslinking agent as a polyfunctional crosslinking agent were mixed into an adhesive composition, which was then used to prepare a coating solution. The coating solution was applied to a release-treated surface of a release-treated PET film (thickness: 50 $\mu$m) to a thickness of about 50 $\mu$m after drying. The product was dried and aged under suitable conditions, thereby forming an adhesive layer having a thickness of 50 $\mu$m. Then, the adhesive layer was laminated to opposite sides of a PET film with a thickness of 12 $\mu$m, thereby producing a double-sided adhesive film.

Physical properties of the adhesive films prepared in the examples and the comparative example were evaluated as follows.

## 1. Writing test

A sample was prepared using each of the adhesive films prepared in the examples and the comparative example, as shown in Fig. 1. The sample was subjected to a writing test using a 0.8R pen at a transfer rate of 60 mm/s and a weight of 450 gf, followed by counting the number of times the sample passed the writing test before an average terminal resistance increase value of the touch panel was 1Ω or more so that the sample lost the functions of the touch panel. The physical properties were evaluated as follows.

<Evaluation of writing test>

O: Passed the writing test 100,000 times or more.
X: Passed the writing test less than 100,000 times.
The results of the test are listed in Table 1.

**TABLE 1**

| Category | Example | | Comparative Example |
|---|---|---|---|
| | 1 | 2 | 1 |
| Writing test | O (passed 150,000 times) | O (passed 150,000 times) | X (passed 80,000 times) |

As seen from Table 1, the adhesive films according to the inventive examples passed through the writing test 150,000 times or more, thereby exhibiting excellent surface press durability when actually applied to a touch panel.

## Claims

1. An adhesive film for a touch panel comprising a sheet-form adhesive layer and satisfying the equation $X \geq 100,000$, where X represents the number of times the adhesive film passes through a writing test performed using a 0.8R pen at a transfer rate of 60 mm/s and a weight of 450 gf until an average terminal resistance increase value of the touch panel is 1 Ω or more, and
   wherein the adhesive layer is a cured product of an adhesive composition comprising an acrylic resin having a weight average molecular weight of 1,000,000 or more, and a polyfunctional crosslinking agent, wherein the weight average molecular weight is obtainable based on polystyrene conversion in gel permeation chromatography.

2. The adhesive film of claim 1, further comprising: a base film, the adhesive layer being directly attached to either side of the base film.

3. The adhesive film of claim 2, wherein the base film is a polyethylene terephthalate (PET) film.

4. The adhesive film of claim 2, wherein the base film has a thickness of 5 to 100 $\mu$m.

5. The adhesive film of claim 1, wherein the adhesive layer satisfies the equation: $X_1 \geq 6$ kg/cm$^2$,
   where $X_1$ represents a dynamic shear strength value of the adhesive layer, as measured at 140°C and a crosshead speed of 0.8 mm/sec using a sample in which the adhesive layer is attached to an indium tin oxide polyethylene terephthalate (ITO PET) film and a glass substrate is interposed therebetween.

6. The adhesive film of claim 1, wherein the adhesive layer satisfies the equation:

$$X_2 \geq 10 \text{ min,}$$

where $X_2$ represents a maintenance time of the adhesive layer, measured using a sample at 140°C by applying a load of 2 kg to an ITO PET film, wherein in the sample the adhesive layer is attached to the ITO PET film and a glass substrate is interposed therebetween.

7. The adhesive film of any one of the preceding claims, wherein the acrylic resin comprises a polymer of a monomer mixture comprising a (meth)acrylic acid ester monomer and a crosslinking monomer.

8. The adhesive film of claim 7, wherein the (meth)acrylic acid ester monomer comprises alkyl (meth)acrylates.

9. The adhesive film of claim 7 or 8, wherein the crosslinking monomer comprises a hydroxyl group containing monomer, a carboxylic group containing monomer, or a nitrogen containing monomer.

10. The adhesive film of claim 6, wherein the polyfunctional crosslinking agent comprises at least one selected from the group consisting of isocyanate compounds, epoxy compounds, aziridine compounds, and chelating agents.

11. The adhesive film of any one of the preceding claims, wherein the adhesive composition comprises 0.01 to 10 parts by weight of the polyfunctional crosslinking agent based on 100 parts by weight of the acrylic resin.

12. The adhesive film of any one of the preceding claims, further comprising: a silane coupling agent.

13. The adhesive film of any one of the preceding claims, further comprising: a tackifier.

14. A touch panel comprising:

   a window film;
   the adhesive film of any one of claims 1 to 13 attached to a lower surface of the window film; and
   a conductive laminate attached to a lower surface of the adhesive film.

15. The touch panel of claim 14, wherein the conductive laminate comprises an upper conductive film having a conductive layer formed on one surface thereof; and a lower conductive film having a conductive layer formed on one surface thereof, the conductive layers being separated from each other while facing each other.

**Patentansprüche**

1. Klebefilm für eine berührungsempfindliche Tafel, Touch Panel, der eine Klebeschicht in Blattform aufweist und die Gleichung $X \geq 100.000$ erfüllt,
   wobei X die Anzahl der Male repräsentiert, mit denen der Klebefilm einem Schreibtest unter Verwendung eines 0.8R Stifts mit einer Übertragungs- bzw. Bewegungsrate von 60 mm/s und einem Gewicht von 450 gf unterzogen wird, bis ein durchschnittlicher Erhöhungswert des Anschlusswiderstands der berührungsempfindlichen Tafel gleich $1\Omega$ oder mehr ist, und
   wobei die Klebeschicht ein gehärtetes Produkt einer klebenden Komposition ist, die ein Acrylharz mit einem durchschnittlichen Gewicht des Molekulargewichts von 1.000.000 oder mehr aufweist, und ein polyfunktionales Querverlinkungsagens enthält, wobei das durchschnittliche Gewicht des Molekulargewichts auf der Basis einer Polystyren-Umwandlung in einer Gel - Permeations - Chromatographie erhältlich ist.

2. Klebefilm nach Anspruch 1, der weiterhin aufweist: einen Basisfilm, wobei die Klebeschicht direkt an einer beliebigen Seite des Basisfilms angebracht ist.

3. Klebefilm nach Anspruch 2, bei dem der Basisfilm ein Polyethylenterephthalat (PET, polyethylene terephthalate) - Film ist.

4. Klebefilm nach Anspruch 2, bei dem der Basisfilm eine Dicke von 5 bis 100 $\mu$m aufweist.

5. Klebefilm nach Anspruch 1, bei dem die Klebeschicht die Gleichung: $X_1 \geq 6$ kg/cm$^2$ erfüllt,
   wobei $X_1$ einen Wert der dynamischen Scherfestigkeit der Klebeschicht, gemessen bei 140°C und einer Kreuzkopfgeschwindigkeit von 0,8 mm/s unter Verwendung einer Probe repräsentiert, bei der die Klebeschicht an einem Indium - Zinn - Oxid-Polyethylen - Terephthalat (ITO PET) - Film angebracht ist und ein Glassubstrat zwischen diesen eingefügt ist.

6. Klebefilm nach Anspruch 1, bei dem die Klebeschicht die Gleichung erfüllt:

$$X_2 \geq 10 \text{ min,}$$

wobei $X_2$ eine Beständigkeitszeit der Klebeschicht repräsentiert, gemessen unter Verwendung einer Probe bei 140°C unter Ausübung einer Last von 2 kg auf einen ITO PET Film, wobei die Klebeschicht in der Probe an einem ITO PET Film angebracht ist und ein Glassubstrat zwischen diesen eingefügt ist.

7.  Klebefilm nach einem beliebigen der vorhergehenden Ansprüche, bei dem das Acrylharz ein Polymer einer Monomermischung aufweist, die ein (Meth-)Acrylsäure-Ester - Monomer und ein Querverlinkungsmonomer enthält.

8.  Klebefilm nach Anspruch 7, bei dem das (Meth-)Acrylsäure - Ester - Monomer Alkyl - (Meth-)Acrylate aufweist.

9.  Klebefilm nach Anspruch 7 oder 8, bei dem das Querverlinkungsmonomer eine Hydroxil - Gruppe, die ein Monomer enthält, eine Karbonsäure - Gruppe, die ein Monomer enthält, oder ein Stickstoff enthaltendes Monomer aufweist.

10. Klebefilm nach Anspruch 6, bei dem das polyfunktionale Querverlinkungs-Agens mindestens eines aufweist, das aus der Gruppe ausgewählt ist, die aus Isocyanat - Verbindungen, Epoxid - Verbindungen, Aziridin - Verbindungen und Chelat - Bildnern besteht.

11. Klebefilm nach einem beliebigen der vorhergehenden Ansprüche, bei dem die adhäsive Komposition 0,01 bis 10 Gewichtsteile des polyfunktionalen Querverlinkungsagens, basierend auf 100 Gewichtsteilen des Acrylharzes, aufweist.

12. Klebefilm nach einem beliebigen der vorhergehenden Ansprüche, der weiterhin umfasst: ein Silan - Kopplungsmittel.

13. Klebefilm nach einem beliebigen der vorhergehenden Ansprüche, der weiterhin aufweist: einen Klebrigmacher.

14. Berührungsempfindliches Panel bzw. Touch-Panel, das aufweist:

    einen Fensterfilm;
    einen Klebefilm gemäß einem beliebigen der Ansprüche 1 bis 13, der an einer unteren Oberfläche des Fensterfilms angebracht ist; und
    ein leitendes Laminat, das an einer unteren Oberfläche des Klebefilms angebracht ist.

15. Berührungsempfindliches Panel nach Anspruch 14, bei dem das leitende Laminat einen oberen leitenden Film, der eine leitende Schicht aufweist, die an einer Oberfläche desselben gebildet ist; und einen unteren leitenden Film aufweist, der eine leitende Schicht enthält, die an einer Oberfläche desselben ausgebildet ist, wobei die leitenden Schichten voneinander gegenseitig getrennt sind, wobei sie jedoch einander zugewandt sind.

**Revendications**

1.  Film adhésif pour écran tactile comprenant une couche adhésive en forme de feuille et satisfaisant à l'équation X $\geq$ 100 000,
    où X représente le nombre de fois que le film adhésif réussit un test d'écriture effectué par utilisation d'un stylo 0,8R à une vitesse de transfert de 60 mm/s et avec un poids de 450 gf jusqu'à ce que la valeur d'augmentation de résistance terminale moyenne de l'écran tactile soit de 1 Q ou plus, et
    dans lequel la couche adhésive est un produit durci d'une composition adhésive comprenant une résine acrylique ayant une masse moléculaire moyenne en masse de 1 000 000 ou plus, et un agent de réticulation polyfonctionnel, la masse moléculaire moyenne en masse pouvant être obtenue sur la base d'une conversion en polystyrène dans une chromatographie d'exclusion diffusion.

2.  Film adhésif selon la revendication 1, comprenant en outre un film de base, la couche adhésive étant directement attachée à l'un ou l'autre côté du film de base.

3.  Film adhésif selon la revendication 2, dans lequel le film de base est un film en poly(téréphtalate d'éthylène) (PET).

**4.** Film adhésif selon la revendication 2, dans lequel le film de base a une épaisseur de 5 à 100 μm.

**5.** Film adhésif selon la revendication 1, dans lequel la couche adhésive satisfait à l'équation :

$$X_1 \geq 6 \text{ kg/cm}^2$$

dans laquelle $X_1$ représente une valeur de résistance à la déchirure dynamique de la couche adhésive, mesurée à 140°C et à une vitesse de tête d'équerre de 0,8 mm/s par utilisation dans un échantillon dans lequel la couche adhésive est attachée à un film en oxyde d'indium et d'étain-poly(téréphtalate d'éthylène) (ITO PET) et un substrat en verre est interposé entre eux.

**6.** Film adhésif selon la revendication 1, dans lequel la couche adhésive satisfait à l'équation :

$$X_2 \geq 10 \text{ min}$$

dans laquelle $X_2$ représente le temps de maintenance de la couche adhésive, mesurée avec un échantillon à 140°C par application d'une charge de 2 kg à un film d'ITO PET, où, dans l'échantillon, la couche adhésive est attachée au film d'ITO PET et un substrat en verre est interposé entre eux.

**7.** Film adhésif selon l'une quelconque des revendications précédentes, dans lequel la résine acrylique comprend un polymère d'un mélange de monomères comprenant un monomère d'ester d'acide (méth)acrylique et un monomère de réticulation.

**8.** Film adhésif selon la revendication 7, dans lequel le monomère d'ester d'acide (méth)acrylique comprend des (méth)acrylates d'alkyle.

**9.** Film adhésif selon la revendication 7 ou 8, dans lequel le monomère de réticulation comprend un monomère contenant un groupe hydroxyle, un monomère contenant un groupe carboxylique, ou un monomère azoté.

**10.** Film adhésif selon la revendication 6, dans lequel l'agent de réticulation polyfonctionnel comprend au moins l'un du groupe constitué par les composés isocyanates, les composés époxy, les composés d'aziridine, et les agents chélatants.

**11.** Film adhésif selon l'une quelconque des revendications précédentes, dans lequel la composition adhésive comprend 0,01 à 10 parties en poids de l'agent de réticulation polyfonctionnel pour 100 parties en poids de la résine acrylique.

**12.** Film adhésif selon l'une quelconque des revendications précédentes, comprenant en outre un agent de couplage au silane.

**13.** Film adhésif selon l'une quelconque des revendications précédentes, comprenant en outre un agent de poisseux.

**14.** Ecran tactile comprenant :

un film de fenêtre ;
le film adhésif de l'une quelconque des revendications 1 à 13 attaché à une surface inférieure du film de fenêtre ; et
un stratifié conducteur attaché à une surface inférieure du film adhésif.

**15.** Ecran tactile selon la revendication 14, dans lequel le stratifié conducteur comprend un film conducteur supérieur ayant une couche conductrice formée sur une surface de celui-ci ; et un film conducteur inférieur ayant une couche conductrice formée sur une surface de celui-ci, les couches conductrices étant séparées l'une de l'autre tout en se faisant mutuellement face.

【FIG.1】

【FIG.2】

【FIG.3】

【FIG.4】

【FIG.5】

【FIG.6】

【FIG.7】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1574557 A1

- KR 20060043847 A